# EUROPEAN PATENT APPLICATION

(11) **EP 4 671 028 A1**
(43) Date of publication of application: **31.12.2025**
(21) Application number: 24185324.1
(22) Date of filing: 28.06.2024
(51) Int. Cl.: B60K 35/233, B60K 35/235, B60K 35/29, B60K 35/81, G02B 27/01, G06F 3/01

(54) **METHOD AND CONTROL CIRCUITRY FOR DISPLAYING INFORMATION ON A HEAD-UP DISPLAY**

(71) Applicant: Harman International Industries, Inc., Stamford, Connecticut 06901 (US)
(72) Inventor: Ivanov, Volodymyr, 85235 Odelzhausen (DE)
(74) Representative: Kraus & Lederer PartGmbB

(57) **Abstract**

A method (800) of displaying information (400-406, 500-512) on a head-up display (114) of a vehicle (100) comprises determining (802) a direction of gaze (204, 206) of a driver (200) of the vehicle (100) and selecting (804) a display mode from a group of display modes based on the direction of gaze (204, 206). Each display mode of the group of display modes defines information (400-406, 500-512) to be displayed on the head-up display (114). The group of display modes comprises at least a normal mode and an extended mode. Information (500-512) displayed in the extended mode differs from information (400-406) displayed in the normal mode. The method further comprises displaying the information (400-406, 500-512) on the head-up display (114) according to the selected display mode.

## Description

### Technical Field

The present application relates to the field of displaying information on a head-up display, in particular to methods and control circuitries for displaying information on a head-up display in a vehicle such as a car or truck.

### Background

Head-up displays are widely used in vehicles, such as cars and trucks. A head-up display (HUD) in a vehicle is a technique that projects driving information onto the windshield or a transparent screen in the driver's line of sight. This allows the driver to access information without having to look away from the road. Typical information displayed includes speed, navigation directions, and safety alerts. The HUD system may include a projector, a combiner (the surface onto which the data is projected), and a computing unit that processes the information to be displayed. For example, the back of the windshield may be treated in such a way that an image projected onto it will reflect to the driver. A further example is to have a small combiner that is separate from the windshield. The HUD system may include a transparent display laminated in between layers of the windshield glass.

For technical, safety, and regulatory reasons, the HUD can only display information in a limited area of the windshield. This may result in not displaying all necessary information, sometimes critical information such as fuel/battery levels, engine checks, etc. On the other hand, sometimes too much information may be displayed, for example at manoeuvring points. This can be distracting or at least uncomfortable for the driver, especially at dark times of the day.

### Summary

Therefore, there is a need to improve the display of information on a head-up display in a vehicle, in particular to display sufficient and important information without distracting or annoying the driver.

This need is met by the method and control circuitry defined in the independent claims. The dependent claims define embodiments.

According to an aspect, a method is provided for displaying information on a head-up display of a vehicle. The method may be implemented in a control circuitry coupled to the head-up display. The method comprises determining a direction of gaze of a driver of the vehicle and selecting a display mode from a group of display modes based on the direction of gaze. Each display mode of the group of display modes defines information to be displayed on the head-up display. The group of display modes comprises at least a normal mode and an extended mode. Information displayed in the extended mode differs from information displayed in the normal mode. According to the method, the information on the head-up display is displayed according to the selected display mode.

For example, the driver's direction of gaze, also known as the line of sight, may be determined as follows. At least one image of the driver's face is captured by a camera of the vehicle. A plurality of images may be captured. In further examples, a video of the driver's face may be captured with the camera. The camera may be a digital camera located in an instrument cluster or in the ceiling or sun visor of the vehicle. The image(s) or video may be processed with image processing software, e.g. implemented in the control circuitry, to determine the driver's direction of gaze. As a result, a position on the windshield of the vehicle may be determined where the direction of gaze intersects the windshield.

A display area for the head-up display may be defined on the windshield or on a combiner located near the windshield between the windshield and the driver's seat. The display area for the head-up display may be defined in an area above the instrument cluster and essentially centred in relation to the steering wheel. The display area may not obstruct the view from the driver to a scenery in front of the vehicle. Rather the display area may be in the driver's peripheral vision when the driver is looking at a scenery in front of the vehicle. The display area may be in the lower area of the windshield and above the steering wheel such that the display area is not obstructed by the steering wheel when the driver is looking at the display area.

As used herein, a display area used by the head-up display on the front windshield of the vehicle may mean and include both a display area on a combiner being integrated into the front windshield and a display area on a combiner that is not integrated into the windshield but is a separate element located inside the vehicle near the front windshield. In further examples, the display area used by the head-up display on the front windshield of the vehicle may be implemented by a transparent display laminated on or in between layers of the windshield glass.

For example, the driver's direction of gaze may be directed towards a scene located outside and in front of the vehicle. In this case, the normal mode may be selected. If the driver's direction of gaze is directed towards the display area of the head-up display, the extended mode may be selected.

According to various examples, an amount of information displayed in the extended mode is greater than an amount of information displayed in the normal mode. For example, in the normal mode, only a few fundamental pieces of information may be displayed, such as current vehicle speed, speed limit and an indication whether any critical information (low fuel level, heat problem, icy conditions) or important information (manoeuvring instructions) is present. In the extended mode, additional information may be displayed, such as a set speed of an (adaptive) cruise control, detailed manoeuvring instructions, fuel level, cooling water temperature, engine speed, details regarding critical information such as low fuel level, cooling water temperature high, icy conditions.

This means that the driver is not distracted or annoyed by a large amount of information from the head-up display when looking at the landscape outside and in front of the vehicle. On the other hand, looking at the display area of the head-up display indicates that the driver is interested in more detailed information, such as vehicle settings or vehicle and navigation information. By automatically switching to the extended mode based on the change in direction of gaze, no manual interaction is required.

In various examples, the display area used by the head-up display on the windshield of the vehicle is the same for all display modes of the group of display modes. The display area may be restricted by regulatory requirements. For example, the display area may not extend into a main field of vision, which should be kept clear so as not to obstruct the driver's view of the area in front of the vehicle.

In some examples, at least one piece of information to be displayed in both the normal mode and the extended mode may be displayed in the normal mode at a lower position in the vertical direction of the vehicle than in the extended mode. In general, the display area used by the head-up display may be positioned to be within the driver's peripheral vision when the driver is looking straight ahead at the road or landscape in front of the vehicle. By moving the information to the lower position in the normal mode, the unobstructed area of the driver's vision can be increased. On the other hand, by moving the information to a higher position in the extended mode, the driver can be more aware of events on the road ahead while concentrating on the information displayed by the head-up display.

According to various examples, at least one piece of information, which is to be displayed in the normal mode and in the extended mode, is displayed as a graphical representation in the normal mode and as a textual representation in the extended mode. The graphical representation may be more easily perceived even if it is only in the driver's peripheral vision. On the other hand, the graphical representation may take up more space of the display area. Therefore, in the extended mode, the same piece of information may be represented as text or numbers, so that more information can be displayed in the same display area.

The method may further comprise a determination of a focal plane of the driver's gaze. The display mode may be selected from the group of display modes additionally based on the focal plane. The focal plane may be determined based on an analysis of the viewing directions of each eye of the driver and the resulting parallax condition.

According to various examples, the extended mode may be selected when the direction of gaze falls on a display area used by the head-up display on a front windshield of the vehicle. Optionally, the focal plane may be considered. For example, the extended mode may be selected when the direction of gaze falls on a display area and the focal plane of the driver's gaze coincides with the plane of a display area.

In some examples, the normal mode may be selected when the direction of gaze falls outside the display area. The normal mode may also be selected when the focal plane does not coincide with the plane of a display area. In some examples, the normal mode may be selected when the direction of gaze is through the windshield above the display area. The normal mode may also be selected when the focal plane is determined to be outside the vehicle, for example at a distance of at least 3 or 5 m.

Switching to normal mode can be delayed. For example, extended mode can be selected as soon as it is detected that the driver is looking at the display area, and switching back to normal mode when it is detected that the driver is looking at the road can be delayed by a few seconds, e.g. 1, 3 or 5 seconds. This can avoid frequent switching between modes when the driver is concentrating on the information displayed by the head-up display, but for safety reasons momentarily interrupts looking at the display area to monitor the traffic situation.

According to various examples, the extended mode may be selected when the direction of gaze falls on a specific area on a front windshield of the vehicle. This specific area may be different from the display area. The specific area may be smaller or larger than the display area. A size and/or position of the specific area may be configurable by the driver. Thus, the driver can configure a sensitivity of the head-up display when switching between the modes, e.g. when activating the extended mode. The normal mode may be selected when the direction of gaze is outside the specific area. Switching back to the normal mode may be delayed, e.g. by a few seconds, for example 1, 2 or 5 seconds. In particular when the specific area is smaller than the display area, the delayed return to the normal mode may avoid frequent and unintentional switching between the modes.

A further aspect relates to a control circuitry for a head-up display of a vehicle. The control circuitry comprises at least one interface for controlling the head-up display and for receiving data from which a direction of gaze of a driver of the vehicle can be determined. The control circuitry may include, for example, a processor (CPU) and memory. Control instructions (software) may be stored in the memory and may cause the processor to perform the functions and methods described herein. The control circuitry may be implemented in or as part of a head unit of the vehicle. The control circuitry may include interfaces to receive vehicle information that may be displayed by the head-up display. The control circuitry may comprise an interface for controlling the head-up display and a further interface for receiving information from a camera installed in the vehicle so that images of the driver can be captured. The images of the driver may be analysed, for example, by image processing software running on the control circuitry to determine the direction of the direction of gaze of the driver. In other examples, the control circuitry may receive data directly indicative of the direction of gaze of the driver. The data indicative of the direction of gaze may be generated by another controller or processing unit of the vehicle in connection with functions of the vehicle, for example a lane departure warning function or a driver drowsiness detection function. In any case, the control circuitry is configured to determine the direction of gaze of the driver of the vehicle based on the received data. Based on the direction of gaze, the control circuitry selects a display mode from a group of display modes. Each display mode of the group of display modes defines information to be displayed on the head-up display. The group of display modes comprises at least a normal mode and an extended mode. The information displayed in the extended mode is different from the information displayed in the normal mode. The control circuitry controls the head-up display to display the information on the head-up display according to the selected display mode.

The control circuitry may be configured to perform the method above described.

A vehicle comprises the above control circuitry, the head-up display, and a camera. The camera is configured to capture at least one image of the face of the driver of the vehicle as the data from which a direction of gaze of the driver of the vehicle can be determined. The head-up display may display information on the windshield of the vehicle based on the selected display mode.

It should be understood that the above summary is provided to introduce in simplified form a selection of concepts that are further described in the detailed description. It is not intended to identify key or essential features of the claimed subject matter, the scope of which is uniquely defined by the claims that follow the detailed description. Further, the claimed subject matter is not limited to implementations that solve any of the disadvantages noted above or in any part of this disclosure.

### Brief description of the Drawings

The above and other aspects and embodiments, advantageous modifications, further improvements, elements, features, steps and characteristics of the present disclosure will become more apparent from the following detailed description of exemplary embodiments and the accompanying figures. Unless otherwise indicated or the context otherwise requires, like reference signs refer to corresponding elements or features of the exemplary embodiments and throughout the figures.
Fig. 1 schematically illustrates a vehicle according to an embodiment.
Fig. 2 schematically illustrates a driver seated in a vehicle according to an embodiment.
Fig. 3 schematically illustrates an interior of a vehicle according to an embodiment.
Fig. 4 schematically illustrates a content displayed by a head-up display in a normal mode according to an embodiment.
Fig. 5 schematically illustrates a content displayed by a head-up display in an extended mode according to an embodiment.
Fig. 6 schematically illustrates adjustment of an area for activating the extended mode according to an embodiment.
Fig. 7 schematically illustrates a plurality of display areas of a head-up display according to an embodiment.
Fig. 8 is a flowchart of a method of displaying information on a head-up display according to an embodiment.

### Detailed description

Various embodiments of the invention are described in detail below with reference to the accompanying figures. It is to be understood that the following description of embodiments is not to be understood in a limiting sense. The scope of the invention is not intended to be limited by the embodiments described below or by the figures, which are intended to be illustrative only.

The figures are to be regarded as schematic representations and the elements shown in the figures are not necessarily shown to scale. Rather, the various elements are shown such that their function and general purpose will be apparent to a person skilled in the art. Any connection or coupling between functional blocks, devices, components or other physical or functional units shown in the figures or described herein may also be implemented by indirect connection or coupling. Coupling between components may be accomplished via a wireless connection. Functional blocks may be implemented in hardware, firmware, software, or a combination thereof. Same reference signs in the various figures referred to similar or identical components.

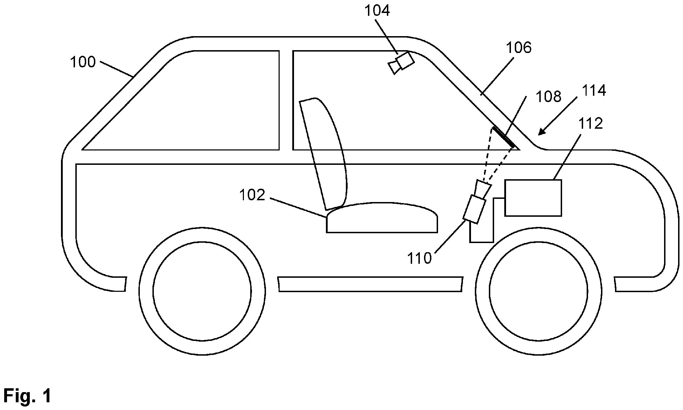

Fig. 1 shows a vehicle 100, for example a car. However, the techniques disclosed herein are not restricted to cars but may be applied to other types of vehicles, for example trucks, ships, trains or motorcycles. The vehicle 100 includes, among other things, a driver's seat 102, a front windshield 106 and a head-up display 114. The head-up display 114 is configured to display information on the front windshield 106 to a driver seated on the driver's seat 102. In the example shown in Fig. 1, the head-up display 114 comprises a projector 110 coupled to a control circuitry 112. The control circuitry 112 controls the projector 110 to display information in a display area 108. The display area 108 may be formed by a combiner of the head-up display 114, for example a beam splitter made of a flat piece of glass located near the windshield 106. In other examples, the display area 108 may be formed by a combiner integrated into the windshield 106. The combiner enables to reflect visual information from the projector 110 to the driver while being essentially transparent for the driver to see the environment in front of the windshield 106 through the display area 108. However, this is only an example for implementing the head-up display 114. In other examples, the head-up display may comprise a transparent display forming the display area 108. The transparent display may be a liquid crystal display (LCD) arranged on a surface of the windshield 106 or laminated between layers of the windshield 106.

The control circuitry 112 may include for example a processor (CPU), memory and interfaces. Control instructions (software) may be stored in the memory to may cause the processor to perform the functions and methods described herein. As used herein, "control circuitry" may include a data processor, such as a microprocessor, or any other means adapted to process data, particularly digital data.

The projector 110 may comprise, for example, an LCT projector or a laser projector. Any other type of projector may be utilized that is configured to project images as provided by the control circuitry 112 with a sufficient resolution and brightness.

The vehicle includes a camera 104 positioned to capture an image of a driver's face when the driver is seated in the driver's seat 102 and looking towards the windshield 106. The camera 104 may be a digital camera that provides images as digital data at an interface of the camera 104. The interface of the camera 104 may be coupled to an interface of the control circuit 112. In other examples, the camera 104 may be coupled to a bus system of the vehicle, and the control circuitry 112 may also be coupled to the bus system.

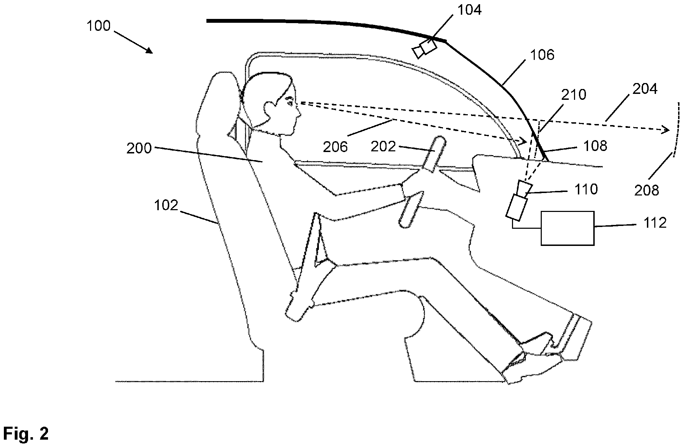

Fig. 2 shows an interior of the vehicle 100 in more detail with a driver 200 seated on the driver's seat 102. The driver 200 is looking into the direction of the windshield 106. The camera 104 captures one or more images or a video of the driver's face and provides corresponding image data. The camera 104 may be coupled to the control circuitry 112 such that the control circuitry 112 receives the image data from the camera 104. The control circuitry 112 may analyse the image data to determine a direction of gaze of the driver 200. In other examples, the camera 104 may be coupled to other controllers or control circuitry of the vehicle 100 that receive the image data from the camera 104 and analyse the image data to determine the direction of gaze of the driver 200. These other controllers or control circuitry may provide the determined direction of gaze to the control circuitry 112. For example, a gaze of direction 204 may be determined when the driver 200 is looking through the windshield 106 at the area in front of the vehicle, for example on the road in front of the vehicle. If the driver 200 is looking at the display area 108, the gaze of direction 206 may be determined. Based on the image data, a focal plane at which the driver is focusing may additionally be determined. For example, the focal plane may be determined based on an orientation of the driver's eyes relative to each other. For example, when the driver is looking out of the vehicle through the windshield, the focal plane 208 may be determined to be well outside the windshield 106. If the driver is looking at the display area 108, the focal plane 210 may be determined to coincide with the display area 108.

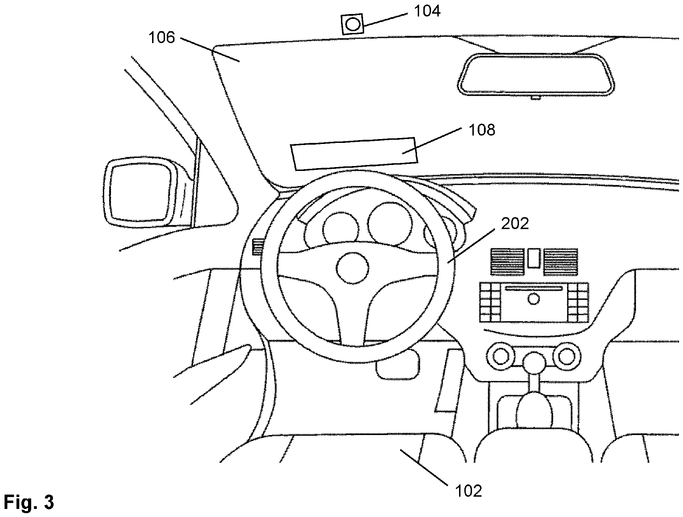

Fig. 3 shows the interior of the vehicle 100 as seen from the driver 200 sitting on the driver's seat 102. The display area 108 is close above a steering wheel 202 of the vehicle 100. The camera 104 may be arranged at a ceiling of the vehicle 100. More than one camera 104 may be provided for capturing images of the driver's face. In other examples, the camera 104 may be arranged in an instrument cluster of the vehicle 100. When the driver 200 looks in the direction 206 shown in Fig. 2, the gaze meets the display area 108. When the driver looks in the direction 204, the gaze extends outward above the display area 108.

Depending on the direction of gaze, the control circuitry 112 may vary the information displayed in the display area 108. The control circuitry 112 may provide a plurality of display modes and may select at least one of the plurality of display modes depending on the direction of gaze. The plurality of display modes may include at least a first display mode, hereinafter referred to as the "normal display mode", and a second display mode, hereinafter referred to as the "extended display mode". The normal display mode may be selected when the driver is not concentrating on the display area 108, for example when the driver is looking in the direction 204. The extended display mode may be selected when the driver is concentrating on the display area 108, for example when the driver is looking in direction 206.

In general, human vision is divided into central vision and peripheral vision, each of which has a different function and is processed differently by the human visual system.

Central vision refers to the area directly in the line of sight, providing the clearest and most detailed vision. This high-acuity vision is crucial for tasks that require precision, such as reading, recognising faces and noticing fine details. Central vision is concentrated in a small area of the retina called the fovea, which is densely packed with cone photoreceptor cells responsible for sharp, detailed vision and colour perception. The field of central vision is relatively narrow, covering only about 2 degrees of visual angle, making it ideal for focused tasks. Peripheral vision, on the other hand, encompasses the wider field outside the direct line of sight, covering about 180 degrees horizontally and 135 degrees vertically. Although peripheral vision has a lower resolution than central vision, it is highly sensitive to motion, allowing the detection of moving objects - a critical function for spatial awareness and the detection of potential threats.

The functional differences between central vision and the peripheral vision highlight their complementary roles. Central vision is used for tasks demanding high precision and detail, such as reading text or estimating the distance to a vehicle in front, while peripheral vision is vital for general awareness and detecting motion. For example, when driving, central vision helps to read road signs and focus on the vehicle ahead, whereas peripheral vision allows to notice pedestrians and other cars in adjacent lanes.

When the driver is looking in direction 204, the display area 108 may be outside the central vision of the driver 200. Therefore, in the normal display mode, only a few pieces of information are displayed. Furthermore, in the normal display mode, the information may be displayed in graphical form such that it can be easily perceived with peripheral vision.

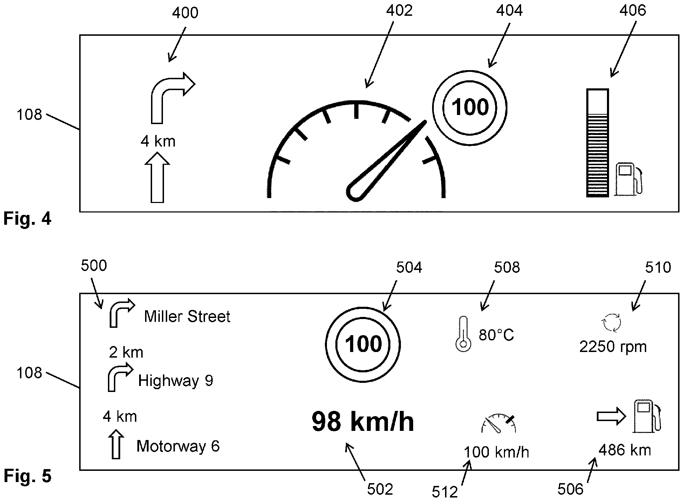

Fig. 4 illustrates an exemplary content of the display area 108 in the normal mode. In the example of Fig. 4, four pieces of information 400 to 406 are displayed. The Information 400 displays simple navigation instructions, for example a straight arrow and a distance indication "4 km" informing how far to go straight ahead, and a turn arrow showing the direction of a subsequent turn. The information 402 shows the current speed of the vehicle in a graphical representation, such as in the form of a round instrument with an indicator needle. The information 404 indicates a current speed limit as a traffic sign, and the information 406 indicates a fill level of a fuel tank of the vehicle in graphical bar form.

However, if the control circuitry 112 determines that the driver 200 is looking in the direction 206, and optionally the control circuitry 112 determines that the focal plane 210 of the driver's gaze coincides with the plane of the display area 108, the control circuitry 112 may select the extended mode and may display corresponding information in the display area 108. In such a scenario, the driver 200 is focused on the display area 108, i.e. the display area 108 may be in the central vision of the driver 200. Therefore, in the extended display mode, more pieces of information may be displayed than in the normal mode. In addition, the information may be displayed in more detail.

Fig. 5 illustrates an exemplary content of the display area 108 in the extended mode. In the example of Fig. 5, seven pieces of information 500 to 512 are displayed.

The information 500 refers to navigation instructions. A straight arrow, a distance indication of "4 km" and a road description of "Motorway 6" inform how far to continue straight ahead on Motorway 6. A right turn arrow and the road name "Highway 9" indicate the direction of a subsequent turn and the road name to follow. A distance indication of "2 km" shows how far to go on Highway 9. A right turn arrow and the road name "Miller Street" indicate the direction of an upcoming turn and the name of the road to follow. The information 502 shows the current speed of the vehicle in text form. The text form takes up less space on the display area 108 than the graphical representation (information 402) in normal mode and provides more accurate information. The information 504 indicates a current speed limit as the information 404 in normal mode. The information 506 indicates a level of the vehicle's fuel tank, with the text information indicating the estimated remaining range at the current level.

Additional information may be displayed in extended mode. Information 508 indicates a current temperature of a coolant of an internal combustion engine of the vehicle 100.

Information 510 indicates a current engine speed in revolutions per minute. Information 512 indicates a set speed of a cruise control system of the vehicle 100.

If, while in the extended mode, the control circuitry 112 determines that the driver is looking back at the road, i.e. the driver is looking in the direction 204, and optionally the control circuitry 112 determines that the focal plane 208 of the driver's gaze does not coincide with the display area 108, the control circuitry 112 may switch back to the normal mode. A delay, for example one, two, three, four or five seconds, before switching back may be implemented such that frequent display mode changes may be avoided. For example, if the driver looks at the display area 108, then looks back at the road for a brief moment, for example one or two seconds, and then looks back at the display area 108, the extended display mode may be maintained continuously even during the brief moment of looking at the road.

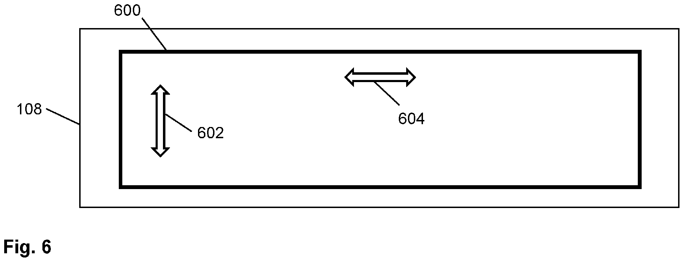

The area that the driver must look at to activate the extended mode may be configurable. For example, a configuration mode for the head-up display may be selected in a head unit of the vehicle 100. Upon activation of the configuration mode, an activation frame 600 may be displayed on the display area 108 as shown in Fig. 6. Head unit controls may be used to adjust the size and/or position of the activation frame 600 as indicated by arrows 602, 604. Once configured, the control circuitry 112 may select the extended mode when the control circuitry 112 determines that the direction of gaze coincides with the area within the configured activation frame 600.

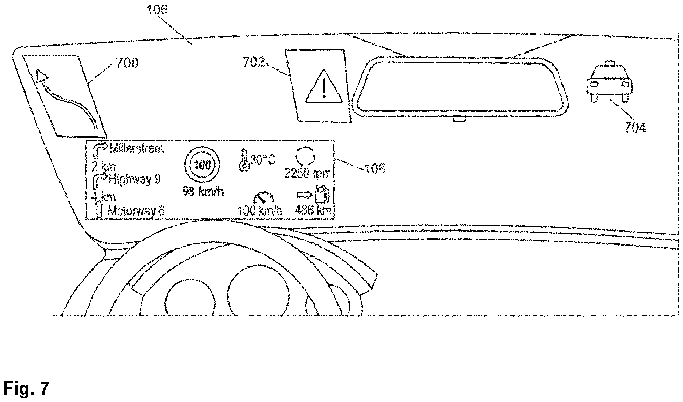

Although the above techniques have been described specifically with respect to the normal mode and the extended mode, further modes may be implemented. For example, the head-up display 114 may be configured to display information in further display areas, such as the display areas 700 and 702 shown in Fig. 7. For example, when the driver 200 is looking ahead on the road in front of the vehicle, for example in the direction of gaze 204, the control circuitry 112 may display information from a lane change assistant in the display area 700. However, if the control circuitry 112 determines that the driver is looking at information 500 in the extended mode of the display area 108, the control circuitry 112 may select a navigation mode in which the control circuitry 112 displays more detailed instructions from the navigation system in the display area 700. The navigation mode may be maintained until the driver's gaze returns to the road, i.e. returns to direction 204, such that the driver can view the display area 700 without the control circuitry 112 switching back to normal mode. In further examples, the control circuitry 112 may select a warning mode whenever the control circuitry 112 determines that the driver is not looking at the road ahead of the vehicle, such as when the driver is looking in the rearview mirror or at the instrument cluster or centre console. In the warning mode, a warning sign as shown in Fig. 7 can be displayed in the display area 702 when a potential obstacle, such as another vehicle 704, is detected in front of the vehicle 100 or any other potentially dangerous situation is detected by the vehicle 100. The warning sign may be displayed flashing to attract the driver's attention. The warning mode can be combined with any other mode, such as the extended mode or the navigation mode.

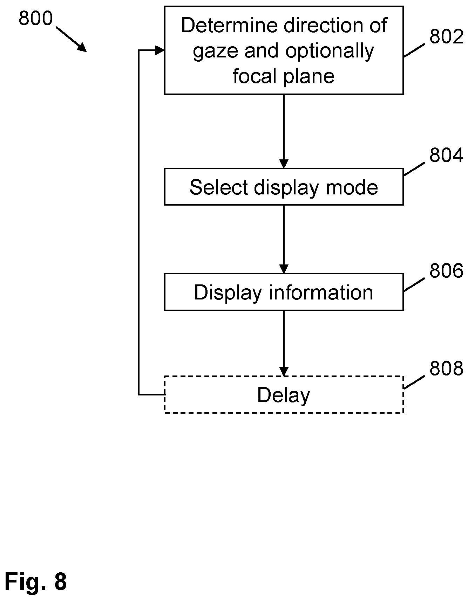

Fig. 8 illustrates a flowchart summarising the method steps of a method 800 that may be performed by the control circuit 112 to control the head-up display 114. The method 800 comprises method steps 802 to 808, wherein method step 808 is optional as indicated by the dashed box. In step 802, a direction of gaze of the driver 200 is determined. In step 804, a display mode is selected from a group of display modes based on the determined direction of gaze. Optionally, a focal plane of the driver's gaze may be determined and also taken into account when selecting the display mode. Each display mode of the group of display modes defines information to be displayed in the display area 108 and optionally in the display areas 700 and 702 of the head-up display 114. The group of display modes may include, for example, the normal mode, extended mode, navigation mode and warning mode described above. In step 806, the information according to the selected display mode is displayed on the head-up display 114. The above method steps may be repeated continuously. However, for some modes it may be advantageous to include the delay step 808 before switching to another mode to avoid unintentional frequent mode switching. For example, delay step 808 may be included before switching from extended mode to normal mode. However, switching to warning mode can always be done without delay step 808.

## Claims

1. A method of displaying information on a head-up display of a vehicle, the method comprising at a control circuitry (112) coupled to the head-up display (114):
- determining (802) a direction of gaze (204, 206) of a driver (200) of the vehicle (100),
- selecting (804) a display mode from a group of display modes based on the direction of gaze (204, 206), each display mode of the group of display modes defining information (400-406, 500-512) to be displayed on the head-up display (114), wherein the group of display modes comprises at least a normal mode and an extended mode, wherein information (500-512) displayed in the extended mode differs from information (400-406) displayed in the normal mode.
- displaying the information (400-406, 500-512) on the head-up display (114) according to the selected display mode.

2. The method of claim 1, wherein an amount of information (500-512) displayed in the extended mode is greater than an amount of information (400-406) displayed in the normal mode.

3. The method of claim 1 or claim 2, wherein a display area (108) used by the head-up display (114) on a front windshield (106) of the vehicle (100) is the same for all display modes of the group of display modes.

4. The method of any one of the preceding claims, wherein at least one piece of information (402, 406, 502, 506), which is to be displayed in the normal mode and in the extended mode, is displayed as a graphical representation (402, 406) in the normal mode and as a textual representation (502, 506) in the extended mode.

5. The method of any one of the preceding claims, wherein the extended mode is selected when the direction of gaze (206) falls on a display area (108) used by the head-up display (114) on a front windshield (106) of the vehicle (100).

6. The method of claim 5, wherein the normal mode is selected when the direction of gaze (204) falls outside the display area (108).

7. The method of any one of the preceding, further comprising:
- determining a focal plane (208, 210) of the driver's gaze (204, 206), and
- selecting the display mode from the group of display modes additionally based on the focal plane (208, 210).

8. The method of claim 7, wherein the extended mode is selected when the focal plane (210) of the driver's gaze (206) coincides with a plane of a display area (108) used by the head-up display (114) on a front windshield (106) of the vehicle (100).

9. The method of any one of the preceding claims, wherein the extended mode is selected when the direction of gaze (206) falls on a specific area on a front windshield (106) of the vehicle (100), a size and/or position of the specific area being configurable by the driver (200).

10. The method of claim 8, wherein the normal mode is selected when the direction of gaze (208) falls outside the specific area.

11. The method of any one of the preceding claims, wherein at least one piece of information (404, 504), which is to be displayed in the normal mode and in the extended mode, is displayed in the normal mode at a lower position in the vertical direction of the vehicle (100) than in the extended mode.

12. The method of any one of the preceding claims, wherein determining the direction of gaze (204, 206) of the driver comprises:
- capturing at least one image of the driver's face with a camera (104) of the vehicle (100), and
- determining the direction of gaze (204, 206) of the driver (200) based on processing the at least one image.

13. A control circuitry for a head-up display of a vehicle, the control circuitry (112) comprising at least one interface for controlling the head-up display (114) and receiving data from which a direction of gaze (204, 206) of a driver (200) of the vehicle (100) can be determined, wherein the control circuitry (112) is configured to:
- determine (802) the direction of gaze (204, 206) of the driver (200) of the vehicle (100) based on the received data,
- select (804) a display mode from a group of display modes based on the direction of gaze (204, 206), each display mode of the group of display modes defining information (400-406, 500-512) to be displayed on the head-up display (114), wherein the group of display modes comprises at least a normal mode and an extended mode, wherein information (500-512) displayed in the extended mode differs from information (400-406) displayed in the normal mode, and
- control the head-up display to display (806) the information (400-406, 500-512) on the head-up display (114) according to the selected display mode.

14. The control circuitry of claim 13, wherein the control circuitry (112) is configured to perform the method of any one of claims 2-12.

15. A vehicle comprising:
- the control circuitry (112) of claim 13 or claim 14.
- the head-up display (114), and
- a camera (104) configured to capture at least one image of the face of the driver (200) of the vehicle (100) as the data from which a direction of gaze (204, 206) of the driver (200) of the vehicle (100) can be determined.
